(19)

Europäisches Patentamt

European Patent Office

Office européen des brevets

(11)   **EP 4 446 870 B1**

(12)                                    **EUROPEAN PATENT SPECIFICATION**

(45) Date of publication and mention
of the grant of the patent:
**29.04.2026   Bulletin 2026/18**

(21) Application number: **23892911.1**

(22) Date of filing: **06.03.2023**

(51) International Patent Classification (IPC):
*G06F 7/544* (2006.01)     *G06F 7/485* (2006.01)
*G06F 9/38* (2018.01)     *G06T 1/20* (2006.01)

(52) Cooperative Patent Classification (CPC):
**G06T 1/20; G06F 7/5443; G06F 9/38**

(86) International application number:
**PCT/CN2023/079754**

(87) International publication number:
**WO 2024/108801 (30.05.2024 Gazette 2024/22)**

(54) **TENSOR CALCULATION UNIT AND USE METHOD, AND DATA PROCESSING APPARATUS AND OPERATION METHOD**

TENSORBERECHNUNGSEINHEIT UND VERWENDUNGSVERFAHREN SOWIE DATENVERARBEITUNGSVORRICHTUNG UND BETRIEBSVERFAHREN

UNITÉ DE CALCUL DE TENSEUR ET PROCÉDÉ D'UTILISATION, ET APPAREIL DE TRAITEMENT DE DONNÉES ET PROCÉDÉ DE FONCTIONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.11.2022   CN 202211469483**

(43) Date of publication of application:
**16.10.2024   Bulletin 2024/42**

(73) Proprietor: **HYGON INFORMATION
TECHNOLOGY CO., LTD.
Tianjin 300392 (CN)**

(72) Inventor: **ZUO, Hang
Tianjin 300392 (CN)**

(74) Representative: **Regimbeau
20, rue de Chazelles
75847 Paris Cedex 17 (FR)**

(56) References cited:
**CN-A- 110 673 824        CN-A- 111 581 595
CN-A- 114 741 650        US-A1- 2018 300 105
US-A1- 2021 157 548      US-A1- 2022 405 598
US-B2- 10 521 194**

**Description**

TECHNICAL FIELD

The embodiments of the present disclosure relate to a tensor calculation unit, a use method of the tensor calculation unit, a data processing apparatus including a plurality of tensor calculation units that are parallel and an operation method of a data processing apparatus.

BACKGROUND

Graphics Processing Unit (GPU)includes a plurality of data processing units. Each data processing unit has its dedicated vector registers and a plurality of arithmetic units that can be executed in parallel, such as multiply-and-accumulate operators. GPUs are dedicated to solving such a problem that can be expressed as data parallel calculation - the program that is executed in parallel on data elements has extremely high calculational density (the ratio of mathematical operations to memory operations). Because a GPU has a large-scale of parallel processing capability, at present more and more applications use GPUs for large-scale parallel calculations. US2021157548A1 describes systems and methods that perform multiply-accumulate operations of normalized numbers in a systolic array. US10521194B2 describes a circuitry that is implemented in specialized processing blocks, and such blocks are referred to as multiply-accumulate (MAC) blocks because they include structures to perform multiplication operations, and sums and/or accumulations of multiplication operations.

SUMMARY

At least one embodiment of the present disclosure provides a tensor calculation unit, including the first multiply-and-accumulate operator and the second multiply-and-accumulate operator that are cascaded. The first multiply-and-accumulate operator includes the first input port, the second input port, the third input port and the first output port. The first input port, the second input port and the third input port are configured to receive parameters A0, B0 and C, respectively. The first multiply-and-accumulate operator is configured to compute $D0 = A0 \times B0 + C$, and the calculation result D0 is output at the first output port. The second multiply-and-accumulate operator includes the fourth input port, the fifth input port, the sixth input port and the second output port. The fourth input port and the fifth input port are configured to receive parameters A1 and B1, respectively. The sixth input port is coupled to the first output port to receive the calculation result D0. The second multiply-and-accumulate operator is configured to compute $D1 = A1 \times B1 + D0$, and the calculation result D1 is output at the second output port.

At least one embodiment of the present disclosure provides a use method of the tensor calculation unit provided by the at least one embodiment of the present disclosure, including: providing parameters A0, B0 and C, respectively, to the first input port, the second input port and the third input port of the first multiply-and-accumulate operator at the first time; providing the parameters A1 and B0, respectively, to the fourth input port and the fifth input port of the second multiply-and-accumulate operator at the second time; and obtaining the calculation result D1 by computing $D1 = A1 \times B1 + D0$ by the second multiply-and-accumulate operator at the third time after obtaining the calculation result D0 by computing $D0 = A0 \times B0 + C$ by the first multiply-and-accumulate operator and providing the calculation result D0 to the second multiply-and-accumulate operator.

For example, in the use method provided by the at least one embodiment of the present disclosure, the second time is later than the first time.

For example, in the use method provided by the at least one embodiment of the present disclosure, the second time and the time when the first multiply-and-accumulate operator outputs the calculation result D0 to the sixth input port of the second multiply-and-accumulate operator are within the same clock cycle.

At least one embodiment of the present disclosure provides a data processing apparatus, including a plurality of tensor calculation units which are parallel and each of which is provided by the at least one embodiment of the present disclosure.

For example, the data processing apparatus provided by the at least one embodiment of the present disclosure further includes: the first storage apparatus, the second storage apparatus and the third storage apparatus. The first storage apparatus and the second storage apparatus are configured to respectively store the input parameters that are input to a plurality of tensor calculation units. The third storage apparatus is configured to respectively store calculation results that are output by the plurality of tensor calculation units.

At least one embodiment of the present disclosure provides an operation method of the data processing apparatus provided by the at least one embodiment of the present disclosure, configured to a multiplication operation of the matrix A × matrix B. The size of the matrix A is M×N, the size of the matrix B is N×M, M and N are both positive integers, and M and N are both less than or equal to the number of the plurality of tensor calculation units. The operation method includes: acquiring M first data elements of at least one column from the matrix A and respectively providing the M first data elements of each column of the at least one column to M tensor calculation units; acquiring at least one second data element of the same column from the matrix B and providing each of the at least one second data element to M tensor calculation units; and respectively using the M first data elements of each column of the at least one column and the at least one second data element to execute a multiply-and-accumulate operation by the M tensor calculation units, and outputting M calculation results, wherein M is larger than or equal to 2.

For example, in the operation method provided by the at least one embodiment of the present disclosure, the acquiring M first data elements of at least one column from the matrix A, include: the acquiring M first data elements $Ai(n)$ and M first data elements $Ai(n+1)$ of each column of two successive columns from the matrix A; the acquiring at least one second data element of the same column from the matrix B, includes: the acquiring two successive second data elements, $B(n)j$ and $B(n+1)j$, of the same column from the matrix B; the operation method further includes acquiring a parameter $Ci$ for accumulation; and the outputting M calculation results by the M tensor calculation units respectively using M first data elements of each column of at least one column and at least one second data element for multiply-and-accumulate operations, include: the outputting M calculation results by the M tensor calculation units using the M first data elements $Ai(n)$ and the M first data elements $Ai(n+1)$, the second data elements $B(n)j$ and $B(n+1)j$ and a parameter $Ci$ to perform the second-order multiply-and-accumulate operation $Di = Ai(n) \times B(n)j + Ai(n+1) \times B(n+1)j + Ci$, wherein $0 <= i, j <= M-1$, $0 <= n <= N-2$ and n is an even number.

For example, the operation method provided by the at least one embodiment of the present disclosure, further includes: dividing the matrix multiplication operation into a plurality of operation batches, in at least one operation batch, maintaining the first data elements of column n and column n+1 acquired from the matrix A, acquiring the nth and (n+1)th second data elements of the successive and different S columns in sequence from the matrix B, and performing the second-order multiply-and-accumulate operation S times in sequence, wherein S is a positive integer that is larger than or equal to 2.

For example, in the operation method provided by the at least one embodiment of the present disclosure, an output matrix obtained by a multiplication of the matrix A and matrix B includes a plurality of submatrices that are parallel and divided along the row direction. Each submatrix includes M rows. The plurality of submatrices include the first submatrix and the second submatrix that are adjacent. The first submatrix and the second submatrix both include S columns. The operation method further includes: performing matrix multiplication operations for the first submatrix and the second submatrix in an interleaved manner.

For example, in the operation method provided by the at least one embodiment of the present disclosure, performing matrix multiplication operations for the first submatrix and the second submatrix in an interleaved manner, includes: in the first time period, performing the second-order multiply-and-accumulate operation S times in sequence to obtain a first calculation result, with first data elements of successive column x and column x+1 acquired from the matrix A, and with xth and (x+1)th second data elements of successive and different S columns corresponding to the first submatrix obtained in sequence from the matrix B; in the second time period, performing the second-order multiply-and-accumulate operation S times in sequence to obtain a second calculation result, with first data elements of successive column x and column x+1 acquired from the matrix A and with xth and (x+1)th second data elements of successive and different S columns corresponding to the second submatrix obtained in sequence from the matrix B; in the third time period, performing the second-order multiply-and-accumulate operation S times in sequence and accumulate the corresponding first calculation result, with first data elements of successive column x+2 and column x+3 acquired from the matrix A and with (x+2)th and (x+3)th second data elements of successive and different S columns corresponding to the first submatrix obtained in sequence from the matrix B; and in the fourth time period, performing the second-order multiply-and-accumulate operation S times in sequence and accumulating the corresponding second calculation result, with the first data elements of successive column x+2 and column x+3 acquired from the matrix A and with the (x+2)th and (x+3)th second data elements of successive and different S columns corresponding to the second submatrix obtained in sequence from the matrix B, wherein x is a positive integer and $0 < +x < +N-4$.

BRIEF DESCRIPTION OF DRAWINGS

In order to clearly illustrate the technical scheme of the embodiments of the present disclosure, the accompanying drawings of the embodiments will be briefly described in the following. Apparently, the accompanying drawings described below are only related to some embodiments of the present disclosure and are not limitations to the present disclosure.

Fig. 1 illustrates a diagram of an example of executing a matrix operation in a GPU;
Fig. 2 illustrates a diagram of a tensor calculation unit provided by at least one embodiment of the present disclosure;
Fig. 3 illustrates a schematic block diagram of a data processing apparatus provided by at least one embodiment of the present disclosure;

Fig. 4 illustrates a schematic flow diagram of an operation method of a data processing apparatus provided by at least one embodiment of the present disclosure; and

Fig. 5 illustrates a temporal execution diagram of tensor calculation units provided by at least one embodiment of the present disclosure.

DETAILED DESCRIPTION

In order to make the purpose, the technical scheme and the advantages of the embodiments of the present disclosure clearer, the following will describe the technical scheme of the embodiments of the present disclosure clearly and completely, in conjunction with the accompanying drawings of the embodiments of the present disclosure. Apparently, the described embodiments are partial embodiments of the present disclosure instead of the whole embodiments. Based on the described embodiments of the present disclosure, all other embodiments obtained by those of ordinary skill in the art without the need for creative labor, belong to the scope of the protection of the present disclosure.

Unless otherwise defined, the technical terms or the scientific terms used in the present disclosure should have ordinary meanings understood by the ordinary skill in the art to which the present disclosure belongs. "First", "second" and the similar words used in the present disclosure do not represent any order, quantity, or importance, but are just used to distinguish different components. As well, "a/an", "one" or "the" or the similar words do not represent a quantitative limitation, but represent the existence of at least one. "Include" or "comprise" or such similar words represent that the element or object appearing before the word covers the element or object listed after the word and its equivalents, instead of excluding other components or objects. "Link" or "connect" or such similar words are not limited to physical or mechanical connections, but may include electrical connections, whether direct or indirect. "Up", "down", "left", "right", and the like are only used to represent the relative position relationships, and when the absolute position of the described object changes, the relative position relationship may also change accordingly.

A Graphics Processing Unit (GPU) (e.g., General-Purpose Graphics Processing Unit (GPGPU)) is specifically designed for parallel processing and can be configured for high-performance parallel processing, can compute different parts of the same task simultaneously, and solve a large-scale problem that cannot be solved by a single processing unit. GPUs have been widely configured for the training of deep learning models. In a GPU, tensor calculation units can be configured for tensor calculations for deep learning, such as for executing matrix multiplication and so on.

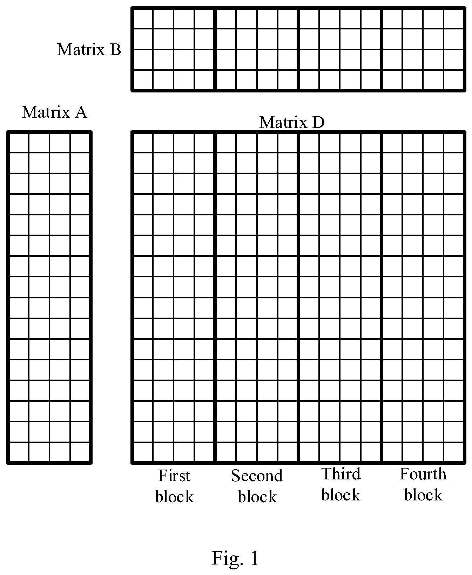

Fig. 1 illustrates a diagram of an example of executing a matrix operation in a GPU.

As shown in Fig. 1, a matrix A of size 16×4 and a matrix B of size 4×16 are multiplied to obtain a matrix D of size 16×16. The hardware divides the matrixes into blocks for calculations according to the extent to which the internal parallel calculation units can compute parallelly once. The formula of block calculation is shown as follows:

$$(AB)_{ij} = \sum_{k=1}^{p} a_{ik}b_{kj} = a_{i1}b_{1j} + a_{i2}b_{2j} + \cdots + a_{ip}b_{pj}$$

where i represents the number of rows of the matrix A, j represents the number of columns of the matrix B, and p represents the number of the matrix blocks.

For example, as shown in Fig. 1, according to the resultant matrix D, the entire matrix operation is divided into 4 blocks for the corresponding calculations, which are parallel, and each block contains 16 rows and 4 columns.

For the first block, the data result from the first calculation for the first four columns of the matrix D are obtained by taking the 16×1 data (elements) of the first column of the matrix A each time and respectively multiplying them with the four data (elements), i.e., the first, second, third and fourth data (that is, in the first, second, third and fourth columns respectively) of the first row of the matrix B four times in sequence. Then, the data result from the second calculation for the first four columns of the matrix D are obtained by taking the 16×1 data of the second column from the matrix A and respectively multiplying them with the four data, i.e., the first, second, third and fourth data of the second row of the matrix B four times in sequence; afterwards, the data result from the third calculation for the first four columns of the matrix D are obtained by taking the 16×1 data of the third column from the matrix A and respectively multiplying them with the four data, i.e., the first, second, third and fourth data of the third row of the matrix B four times in sequence; afterwards, the data result from the fourth calculation for the first four columns of the matrix D are obtained by taking the 16×1 data of the fourth column from the matrix A and respectively multiplying them with the four data, i.e., the first, second, third and fourth data of the fourth row of the matrix B four times in sequence. Finally, the results of the matrix accumulating of four times are obtained by adding together from the result of the first calculation to the result of the fourth calculation correspondingly, and thus the calculation results of the first block of the matrix D are obtained. The final value of each element of the first four columns of the matrix D is obtained by adding the result of the previous calculation with the result of the next calculation in the same way each time.

Next, for the second block, the data result from the first calculation of the second four columns of the matrix D are obtained by taking the 16×1 data of the first column from the matrix A each time and respectively multiplying them with the four data, i.e., the fifth, sixth, seventh and eighth data (that is, in the fifth, sixth, seventh and eighth columns respectively) of the first row of the matrix B four times in sequence. Then, the data of the second calculation of the second four columns of the matrix D are obtained by taking the 16×1 data of the second column from the matrix A and respectively multiplying them with the four data, i.e., the fifth, sixth, seventh and eighth of the second row of the matrix B four times in sequence; afterwards, the data of the third calculation of the second four columns of the matrix D are obtained by taking the 16×1 data of the third column from the matrix A and respectively multiplying them with the four data, i.e., the fifth, sixth, seventh and eighth of the third row of the matrix B four times in sequence; afterwards, the data of the fourth calculation of the second four columns of the matrix D are obtained by taking the 16×1 data of the fourth column from the matrix A and respectively multiplying them with the four data, i.e., the fifth, sixth, seventh and eighth of the fourth row of the matrix B four times in sequence. Finally, the results of the matrix accumulating four times are obtained by adding together from the result of the first calculation to the result of the fourth calculation correspondingly, and thus the calculation results of the second block of the matrix D are obtained. The final value of each element of the first four columns of the matrix D is obtained by adding the result of the previous calculation with the result of the next calculation in the same way each time.

Next, for the third block, in the same way, the calculation results of the third block of the matrix D corresponding to the ninth, tenth, eleventh and twelfth columns of the matrix B are obtained.

Next, for the fourth block, in the same way, the calculation results of the fourth block of the matrix D corresponding to the thirteenth, fourteenth, fifteenth and sixteenth columns of the matrix B are obtained.

Therefore, in order to execute the calculations of the matrix operation of Fig. 1 in parallel, at least 16 multiply-and-accumulate operators are required in total. Every time the calculations of 16 data of the matrix A and one data of the matrix B are performed simultaneously, and 16 calculation results are output. For example, if the matrix is of double-precision, then 16 64-bit calculation results are output per clock cycle and a Random Access Memory (RAM) with a read/write interface of 1024 bits width is required to store data.

The above matrix multiplication can be represented by the formula $D = A_i \times B_i + C_i$ (i=0... 3), where i=0 ... 3 represents that 4 iterations are required to complete the calculation.

For example, in the first iteration of calculation, the parameter $C_i$ is 0, and afterwards the parameter $C_i$ of each iteration calculation is the result of the previous iteration calculation.

The inventor notices that, in order to accelerate the speed of the matrix calculation, a method is to stack another 16 multiply-and-accumulate operators in parallel in the horizontal direction and execute the calculation of another 16×4 matrix simultaneously, which means executing two different 16×4 regions of the matrix D simultaneously. For example, in the first calculation, the 16×1 data of the first column of the matrix A are taken by the first group of 16 multiply-and-accumulate operators each time and are multiplied respectively with four data, i.e., the first, second, third and fourth data of the first row of the matrix B in sequence, and the data of the first calculation of the first four columns of the matrix D are obtained. The 16×1 data of the first column of the matrix A are taken by the second group of 16 multiply-and-accumulate operators each time and are multiplied respectively with the fifth, sixth, seventh and eighth data of the first row of the matrix B in sequence, and the data of the first calculation of the second four columns of the matrix D are obtained, so in the first calculation, the data of the first calculation of two 16×4 regions of the matrix D are obtained simultaneously. Then in the second calculation, the 16×1 data of the second column of the matrix A are taken by the first group of 16 multiply-and-accumulate operators each time and are multiplied respectively with the first, second, third and fourth data of the first row of the matrix B in sequence, and the data of the second calculation of the first four columns of the matrix D are obtained. The 16×1 data of the second column of the matrix A are taken by the second group of 16 multiply-and-accumulate operators each time and are multiplied respectively with the fifth, sixth, seventh and eighth data of the first row of the matrix B in sequence, and the data of the second calculation of the second four columns of the matrix D are obtained, so in the second calculation, the data of the second calculation of two 16×4 regions of the matrix D are obtained simultaneously and are accumulated with the data of the first calculation. When the four accumulation operations of the two 16×4 regions of the matrix D are completed, the two groups of 16 multiply-and-accumulate operators begin to compute the other two 16×4 regions in the same way. This method allows two groups of multiply-and-accumulate operators that are parallel to reuse the data of the matrix A, and can double the calculation speed of the same matrix. This method causes the output result doubled from the original 16 64-bit to 32 64-bit, that is, the writing bandwidth of RAM is doubled.

The other method is that two groups of multiply-and-accumulate operators that are parallel are staggered by one clock cycle in time. In this way, their outputs are not in the same clock so that the RAM with the same interface width can be used to achieve the purpose of doubling calculation. However, writing RAM in this way requires two consecutive clock cycles, which preempts the ports of other elements in GPU for writing RAM.

At least one embodiment of the present disclosure provides a tensor calculation unit and a data processing apparatus including the tensor calculation unit. The tensor calculation unit includes the first multiply-and-accumulate operator and the second multiply-and-accumulate operator that are cascaded. The first multiply-and-accumulate operator includes the first input port, the second input port, the third input port and the first output port. The first input port, the second input port and the third input port are configured to receive parameters A0, B0 and C, respectively. The first multiply-and-accumulate operator is configured to compute $D0=A0\times B0+C$ and the calculation result D0 is output at the first output port. The second multiply-and-accumulate operator includes the fourth input port, the fifth input port, the sixth input port and the second output port. The fourth input port and the fifth input port are configured to receive parameters A1 and B1, respectively, and the sixth input port is coupled to the first output port to receive the calculation result D0. The second multiply-and-accumulate operator is configured to compute $D1=A1\times B1+D0$ and the calculation result D1 is output at the second output port.

The tensor calculation unit and the data processing apparatus provided by the embodiment of the disclosure can use a cascading method to double the calculation capability for matrix operations, and even can stack more multiply-and-accumulate operation units indefinitely under the condition of providing the same RAM bandwidth.

At least one embodiment of the disclosure further provides a use method of the tensor calculation unit and an operation method of the data processing apparatus.

The embodiments of the disclosure are described in detail below in conjunction with the accompanying drawings, but the present disclosure is not limited to these specific embodiments.

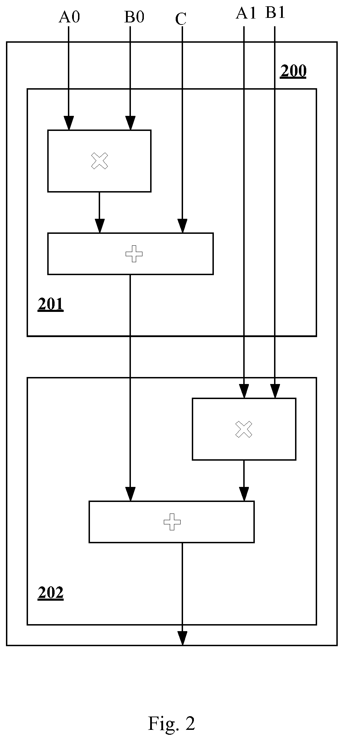

Fig. 2 illustrates the diagram of the tensor calculation 200 unit provided by at least one embodiment of the present disclosure.

As shown in Fig. 2, the tensor calculation unit 200 includes the first multiply-and-accumulate operator 201 and the second multiply-and-accumulate operator 202 that are cascaded. The first multiply-and-accumulate operator 201 includes the first input port, the second input port, the third input port and the first output. The second multiply-and-accumulate operator 202 includes the fourth input port, the fifth input port, the sixth input port and the second output port. The sixth input port is coupled to the first output port of the first multiply-and-accumulate operator 201.

The first input port of the first multiply-and-accumulate operator 201 is configured to receive the parameter A0, the second input port is configured to receive the parameter B0, and the third input port is configured to receive the parameter C.

The first multiply-and-accumulate operator 201 is configured to compute $D0=A0\times B0+C$, and the calculation result D0 is output at the first output port.

The fourth input port of the first multiply-and-accumulate operator 202 is configured to receive the parameter A1, the fifth input port is configured to receive the parameter B1, and the sixth input port is coupled to the first output port to receive the calculation result D0.

The second multiply-and-accumulate operator 202 is configured to compute $D1=A1\times B1+D0$, and the calculation result D1 is output at the second output port.

The tensor calculation unit 200 cascades the two multiply-and-accumulate operators end to end. The first multiply-and-accumulate operator computes $D0=A0\times B0+C$ and the second multiply-and-accumulate operator computes $D1=A1\times B1+D0$, achieving $D1=A1\times B1+A0\times B0+C$ as a whole. Moreover, inside the tensor calculation unit 200, the intermediate calculation result D0 is directly sent to the sixth input port of the second multiply-and-accumulate operator by the first output port of the first multiply-and-accumulate operator in the way of hardware, which avoids the case that two multiply-and-accumulate operators write a RAM simultaneously. The calculation capability can be doubled by the cascading method under the condition of providing the same RAM bandwidth.

In the operation above, if the fourth input port and the fifth input port of the second multiply-and-accumulate operator have no input (in this case, the input is processed as 0), the tensor calculation unit outputs D0 at the second output port of the second multiply-and-accumulate operator. Thus, as a whole, the achieved operation is $D0=A0\times B0+C$, and then this mode can be called a "local mode."

If more multiply-and-accumulate operators are cascaded in the tensor calculation unit 200, an extended stack having infinite multiply-and-accumulate operators can theoretically be achieved. For example, the tensor calculation unit 200, in addition to the first multiply-and-accumulate operator 201 and the second multiply-and-accumulate operator 202 that are both cascaded, may further includes a third multiply-and-accumulate operator. The third multiply-and-accumulate operator includes three input ports, in which the input port for receiving the accumulation parameter can be directly coupled with the second output port of the second multiply-and-accumulate operator 202 in order to directly receive the calculation result D1, and the other two input ports for receiving multiplication factors are configured to receive corresponding parameters respectively. Similarly, more multiply-and-accumulate operators can be cascaded therein.

For example, in some embodiments of the present disclosure, at the first time (e.g., the first clock cycle) the parameters A0, B0, and C are respectively provided to in the first input port, the second input port, and the third input port of the first multiply-and-accumulate operator; at the second time (e.g., the second clock cycle), the parameters A1 and B1 are respectively provided to the fourth input port and fifth input port of the second multiply-and-accumulate operator; at the third time (e.g., the third clock cycle), the first multiply-and-accumulate operator computes $D0=A0\times B0+C$ to obtain the calculation result D0, and after the calculation result D0 is provided to the second multiply-and-accumulate operator, the second multiply-and-accumulate operator computes $D1=A1\times B1+D0$ to obtain the calculation result D1.

Because multiplication and accumulation in multiply-and-accumulate operators are performed at different clock cycles, it is not necessary for parameters A0, A1, B0, B1, and C to reach the input ports simultaneously. For example, in some embodiments, the second time is later than the first time. Because the multiplication of A0 and B0 is performed first, A0, B0 and C reach the input ports of the first multiply-and-accumulate operator early simultaneously. The multiplication of A1 and B1 can be performed in the second multiply-and-accumulate operator, therefore A1 and B1 can reach the input ports of the second multiply-and-accumulate operator a few clock cycles later. For example, A1 and B1 can reach the input ports of the second multiply-and-accumulate operator before the third time or at the same time as the third time (that is, before or at the same time that the first multiply-and-accumulate operator obtain D0 by computing). For the latter, the second time and the third time, for example, are the same clock cycle.

For example, parameters A1 and B1 and parameters A0 and B0 can also reach the input ports of the corresponding multiply-and-accumulate operators at the same time, which means that the second time and the first time are the same, for example, they are in the same clock cycle. By coordinating the first time, the second time and the third time, a smoother execution pipeline can be obtained so as to improve processing efficiency.

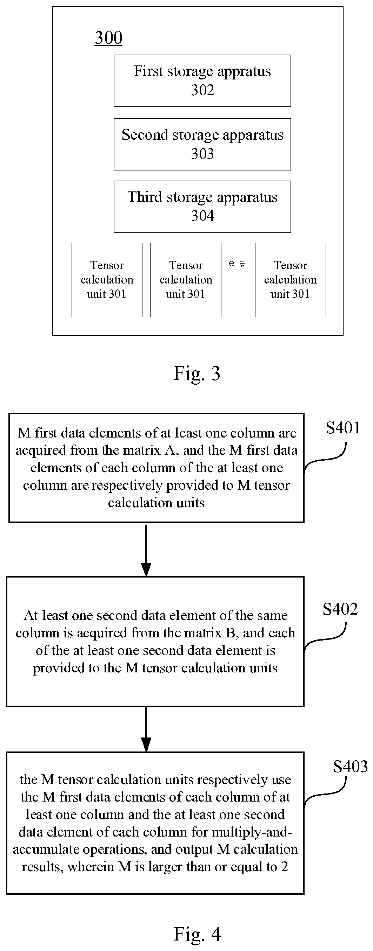

Fig. 3 illustrates a schematic block diagram of a data processing apparatus 300 provided by at least one embodiment of the present disclosure. The data processing apparatus 300 includes a plurality of tensor calculation units 301 that are parallel, and the structure of the tensor calculation unit 301 can be referred to that shown in Fig. 2.

For example, in some embodiments, the data processing apparatus 300 can further includes the first storage apparatus 302, the second storage apparatus 303 and the third storage apparatus 304.

The first storage apparatus 302 and the second storage apparatus 303 are configured to respectively store the input parameters that are input to the plurality of tensor calculation units.

For example, the first storage apparatus 302 includes vector registers, which respectively configured to store the data of the input matrix that are used to perform a matrix operation, and can enter the data in parallel to the plurality of tensor calculation units 301 that are parallel. The second storage apparatus 303 includes scalar registers or vector registers, configured to store the parameter C, and can enter the data in parallel to the plurality of the tensor calculation units 301 that are parallel.

The third storage apparatus 304 is configured to respectively store the calculation results output by the plurality of tensor calculation units. For example, the third storage apparatus 304 includes vector registers, configured to store the data of the output matrix obtained by matrix operation, can receive the data of calculation results in parallel from the plurality of the tensor calculation units 301 that are parallel.

Fig. 4 illustrates a schematic flow diagram of an operation method of a data processing apparatus provided by at least one embodiment of the present disclosure. This operation method is applicable to the multiplication operation of the matrix A × matrix B. The size of the matrix A is M×N and the size of the matrix B is N×M, where M and N are both positive integers and less than or equal to the number Q of a plurality of tensor calculation units. It can be understood that when the dimension of the matrix to be computed is larger than Q, the large matrix can be split into a plurality of smaller matrices with a dimension that is less than or equal to Q for calculation, and then the calculation results of the plurality of smaller matrices are flattened to obtain the calculation result of the larger matrix.

As shown in Fig. 4, the operation method includes the following steps S401~S403.

Step S401: M first data elements of at least one column are acquired from the matrix A, and the M first data elements of each column of the at least one column are respectively provided to M tensor calculation units.

Step S402: at least one second data element of the same column is acquired from the matrix B, and each of the at least one second data element is provided to the M tensor calculation units.

Step S403: the M tensor calculation units respectively use the M first data elements of each column of at least one column and the at least one second data element of each column for multiply-and-accumulate operations, and output M calculation results, wherein M is larger than or equal to 2.

For example, in some embodiments of the present disclosure, in Step S401, M first data elements of a column (e.g., first data element a(0)-a(M-1)) is acquired from the matrix A, and then these M first data elements are respectively provided to M tensor calculation units; in Step S402, a second data element (e.g., second data element b(0)) is acquired from the matrix B, and the second data element is provided to M tensor calculation units; in Step S403, the M tensor calculation units use M first data elements and the second data element respectively for multiply-and-accumulate operations, outputting M calculation results. For example, the first tensor calculation unit uses the first data element a(0) and the second data element b(0) for calculation, the second tensor calculation unit uses the first data element a(1) and the second data element b(0) for calculation, ...., the Mth tensor calculation unit uses the first data element a(M-1) and the second data element b(0) for calculation. In these embodiments, each tensor calculation unit is in the "local mode."

For example, in some embodiments of the present disclosure, Step S401 may include acquiring M first data elements Ai (n) and M first data elements Ai (n+1) of each column of two successive columns (the nth column and the (n+1) th column) from the matrix A; Step S402 may include acquiring two successive second data elements B(n)j and B(n+1)j located in the nth raw and the (n+1)th rows respectively of the same column from the matrix B, and the operation method may further include acquiring parameters Ci for accumulation; Step S403 may include: M tensor calculation units respectively using the M first data elements Ai (n) of the nth column n and the M first data elements Ai (n+1) of the (n+1)th column, the second data elements B(n)j and B(n+1)j and the parameter Ci to perform the second-order multiply-and-accumulate operation Di=Ai(n)×B(n)j+Ai(n+1)×B(n+1)j+Ci, outputting M calculation results, wherein 0<=i, j<=M-1, 0<=n<=N-2 and n is an even integer. Therefore, calculations can be executed multiple times based on the value of j.

For example, taking j=0 as an example, the first tensor calculation unit uses the first data elements A0(n) and A0(n+1) (i.e., i is 0 to M-1), the second data elements B(n)0 and B(n+1)0 (i.e., j=0) and C0 to for calculations, the second tensor calculation unit uses the first data elements A1(n) and A1(n+1), the second data elements B(n)0 and B(n+1)0 and C1 to for calculations, ..., and the Mth tensor calculation unit uses the first data elements A(M-1)(n) and A(M-1) (n+1), the second data elements B(n)0 and B(n+1)0 and C(M-1) for calculations, from which M calculation results are obtained. Similar processing is performed when j equals to any other value.

For example, for the matrix A and the matrix B as shown in Fig. 1, M=16, N=4. The 16 first data elements Ai0 of the first column and the 16 first data elements Ai1 of the second column are acquired from the matrix A, and the 16 first data elements Ai0 and the 16 first data elements Ai1 are provided to 16 tensor calculation units, respectively. The first and the second elements, i.e., the two second data elements B00 and B10, of the first column are acquired from the matrix B, and each of the two second data elements is provided to 16 tensor calculation units. If required, the parameter Ci for accumulation can be further acquired. The 16 tensor calculation units respectively use the 16 first data elements Ai0 and the 16 first data elements Ai1 acquired from the matrix A, the second data elements B00 and B10 acquired from the matrix B and the parameter Ci to perform multiply-and-accumulate operation Di=Ai0×B00+Ai1 ×B10+Ci, outputting 16 calculation results D0~D15, wherein the i is 0 to 15.

In at least one example, assuming that each multiply-and-accumulate operator requires 4 clock cycles to complete the calculation, the tensor calculation unit requires 8 clock cycles to complete the calculation. Typically, the data input speed of the GPU is 4 clock cycles for inputting new data. For example, in the first clock cycle, A0, B0, A1, B1, C are input to the input ports of a tensor calculation unit. In the fifth clock cycle, new A0, B0, A1, B1, C are input to the input ports of the tensor calculation unit. But the calculation result D0 (as a new C) of the previous round can only be obtained by calculation in the eighth clock cycle, that is, the parameter C for the calculation in this round has not yet been computed, and it may cause a latency issue due to cascading.

With respect to the above-mentioned latency issue, in at least one embodiment of the present disclosure, the matrix multiplication operation is divided into a plurality of operation batches, and a circuit is configured to control the operation batches to be executed in an interleaved manner.

For example, in some embodiments of the present disclosure, the matrix multiplication operation is divided into a plurality of operation batches, and for example, in each operation batch, maintaining the first data element of the nth column n and the (n+1)th column that are successive and obtained from the matrix A, acquiring the nth and (n+1)th second data elements of the successive and different S columns from the matrix B in sequence, and performing the second-order multiply-and-accumulate operation S times in sequence, where S is a positive integer and is larger than or equal to 2.

For example, for the matrix multiplication operation of the matrix A and matrix B as shown in Fig. 1, the matrix multiplication operation is divided into a plurality of operation batches, and each operation batch corresponds to a 16×4 region of the matrix D. For example, in the first operation batch, the first data elements of the first column and the second column acquired from the matrix A are maintained, and then the first and second ones of the second data elements of the first four columns (i.e., the two second data elements located in the first row and the second row of the first four columns, respectively) are acquired from the matrix B in sequence, and the second-order multiply-and-accumulate operation is performed four times in sequence. For example, in the second operation batch, the first data elements of the first column and the second column acquired from the matrix A are maintained, and then the first and second ones of the second data elements of the fifth column to the eighth column (i.e., the two second data elements located in the first row and the second row of the fifth column to the eighth column, respectively) are acquired from the matrix B, and the second-order multiply-and-accumulate operation is performed four times in sequence, etc.

For example, in some embodiments of the present disclosure, an output matrix that is obtained by multiplying the matrix A with the matrix B includes a plurality of submatrices that are parallel and divided along the row direction, each submatrix includes M rows, the plurality of submatrices includes a first submatrix and a second submatrix, and the first submatrix and the second submatrix are adjacent to each other and both include S columns; and the operation method further includes: executing matrix multiplication operations for the first submatrix and the second submatrix in an interleaved manner.

For example, in some embodiments of the present disclosure, the matrix multiplication operation for the first submatrix and the second submatrix is performed in an interleaved manner, including: in the first time period, executing the second-order multiply-and-accumulate operation S times in sequence to obtain the first calculation result, with the first data elements of successive column x and column x+1 acquired from the matrix A and with the xth and (x+1)th ones of the second data elements of successive and different S columns corresponding to the first submatrix obtained in sequence from the matrix B; in the second time period, executing the second-order multiply-and-accumulate operation S times in sequence to obtain the second calculation result, with the first data elements of successive column x and column x+1 acquired from the matrix A and with the xth and (x+1)th ones of the second data elements of successive and different S columns corresponding to the second submatrix obtained in sequence from the matrix B; in the third time period, executing the second-order multiply-and-accumulate operation S times in sequence, with the first data elements of successive column x+2 and column x+3 acquired from the matrix A and with the (x+2)th and (x+3)th ones of the second data elements of successive and different S columns corresponding to the first submatrix obtained in sequence from the matrix B, and adding the result with the first calculation result correspondingly; and in the fourth time period, executing the second-order multiply-and-accumulate operation S times in sequence, with the first data elements of successive column x+2 and column x+3 acquired from the matrix A and with the (x+2)th and (x+3)th ones of the second data elements of successive and different S columns corresponding to the second submatrix obtained in sequence from the matrix B, and adding the result with the second calculation result correspondingly, where x is a positive integer and 0<=x<=N-4.

The content above describes the matrix multiplication operation for the first submatrix and the second submatrix performed in an interleaved manner as an example. In another embodiment, the plurality of submatrices include the first submatrix, the second submatrix and the third submatrix that are adjacent, the first submatrix, the second submatrix and the third submatrix all include S columns, and the operation method further includes: the matrix multiplication operation for the first submatrix, the second submatrix and the third submatrix is performed in an interleaved manner.

In at least one embodiment of the present disclosure, the second-order multiply-and-accumulate operation is achieved by cascading two multiply-and-accumulate operators, the existing multiply-and-accumulate operators can be utilized effectively to achieve the same accuracy of operation without adding more logic circuits, and each cascade of the multiply-and-accumulate operators requires to add interleaved matrix blocks to compensate for the increased latency caused by the cascade. The interleaved manner between different matrix blocks can be utilized to solve the latency issue caused by the cascade.

The following describes a specific example to illustrate how the matrix multiplication of the first and second submatrices is performed in an interleaved manner.

For example, for the matrix multiplication operation of the matrix A and matrix B as shown in Fig. 1, the size of the matrix A is 16×4, the size of the matrix B is 4x16, and the matrix A and the matrix B are multiplied to obtain the matrix D having a size of 16×16. The matrix D includes four submatrices that are parallel and divided along the row direction, and each submatrix includes 16 rows (i.e., the submatrices are the first, second, third, and fourth block matrices from the left to the right in Fig. 1). The first block matrix and the second block matrix are the first submatrix and the second submatrix that are adjacent, respectively, the third block matrix and the fourth block matrix are the first submatrix and the second submatrix that are adjacent, respectively, and each of the first submatrix and the second submatrix includes 4 columns.

In the first round of four clock cycles, for the first data elements of column 1 and column 2 acquired from the matrix A, the first and the second ones of the second data elements of the first four columns are acquired from the matrix B in sequence, and the second-order multiply-and-accumulate operation is performed four times in sequence to obtain the first calculation result corresponding to the first block matrix.

In the second round of four clock cycles, for the first data elements of column 1 and column 2 acquired from the matrix A, the first and the second ones of the second data elements of the fifth column to the eighth column are acquired from the matrix B in sequence, and the second-order multiply-and-accumulate operation is performed four times in sequence to obtain the second calculation result corresponding to the second block matrix.

In the third round of four clock cycles, for the first data elements of column 3 and column 4 acquired from the matrix A, the third and the fourth ones of the second data elements of the first four columns are acquired from the matrix B in sequence, the second-order multiply-and-accumulate operation is performed four times in sequence and the first calculation result is accumulated the result correspondingly to obtain the calculation result of the first block matrix.

In the fourth round of four clock cycles, for the first data elements of column 3 and column 4 acquired from the matrix A, the third and the fourth ones of the second data elements of the fifth column to the eighth column are acquired from the matrix B in sequence, the second-order multiply-and-accumulate operation is performed four times in sequence and the second calculation result is accumulated to the result correspondingly to obtain the calculation result of the second block matrix.

In the fifth round of four clock cycles, for the first data elements of column 1 and column 2 acquired from the matrix A, the first and the second ones of the second data elements of the ninth column to the twelfth column are acquired from the matrix B in sequence, and the second-order multiply-and-accumulate operation is performed four times in sequence to obtain the third calculation result corresponding to the third block matrix.

In the sixth round of four clock cycles, for the first data elements of column 1 and column 2 acquired from the matrix A, the first and the second ones of the second data elements of the thirteenth column to the sixteenth column are acquired from the matrix B in sequence, and the second-order multiply-and-accumulate operation is performed four times in sequence to obtain the fourth calculation result corresponding to the fourth block matrix.

In the seventh round of four clock cycles, for the first data elements of column 3 and column 4 acquired from the matrix A, the third and the fourth ones of the second data elements of the ninth column to the twelfth column are acquired from the matrix B in sequence, the second-order multiply-and-accumulate operation is performed four times in sequence and the third calculation result is accumulated to the result correspondingly to obtain the calculation result of the third block matrix.

In the eighth round of four clock cycles, for the first data elements of column 3 and column 4 acquired from the matrix A, the third and the fourth ones of the second data elements of the thirteenth column to the sixteenth column are acquired from the matrix B in sequence, the second-order multiply-and-accumulate operation is performed four times in sequence and the fourth calculation result is accumulated to the result correspondingly to obtain the calculation result of the fourth block matrix.

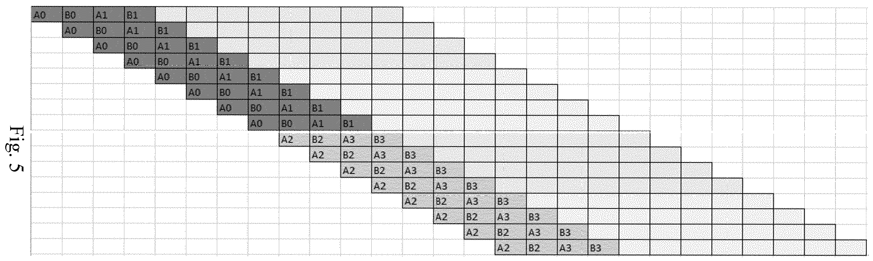

In the embodiment, the matrix multiplication operation is divided into 8 operation batches. Each operation batch includes one round of four clock cycles. The execution diagram of the tensor calculation unit provided by the embodiment of the present disclosure in sixteen clock cycles of the first four rounds is illustrated in Fig. 5 below.

For example, the first data element acquired from columns 1 and column 2 of the matrix A is represented by A0 and A1 respectively, the first data element acquired from column 3 and column 4 of the matrix A is represented by A2 and A3 respectively, the second data element acquired from row 1 and row 2 of the matrix B is represented by B0 and B1 respectively, and the second data element acquired from row 3 and row 4 of the matrix B is represented by B2 and B3 respectively. As shown in Fig. 5, in the four clock cycles of the first round, the second-order multiply-and-accumulate operation of A0, B0, A1, and B1 is performed to compute the first block of 16×4 matrix. In the four clock cycles of the second round, the second-order multiply-and-accumulate operation of A0, B0, A1, and B1 is performed to compute the second block of 16×4 matrix. In the four clock cycles of the third round, the second-order multiply-and-accumulate operation of A2, B2, A3, and B3 is performed to compute the first block of 16×4 matrix, and the calculation result of the first round is accumulated with the calculation result of the current round. In the four clock cycles of the fourth round, the second-order multiply-and-accumulate of A2, B2, A3, and B3 is performed to compute the second block of 16×4 matrix, and the calculation result of the second round is accumulated with the calculation result of the current round.

The data processing apparatus according to the embodiment of the disclosure includes a plurality of tensor calculation units that are parallel. The data processing apparatus may be, for example, a Graphics Processing Unit (e.g., GPGPU), or other types of processors, such as data processors, tensor processors, neural network processors, etc.

At least one embodiment of the present disclosure also provides an electronic apparatus. The electronic apparatus includes the data processing apparatus described above. For example, the electronic apparatus may further include a Central Processing Unit (CPU). The CPU and the data processing apparatus constitute a heterogeneous computing system through a system bus in combination. For example, the bus may be a Peripheral Component Interconnect (PCI) bus or an Extended Industry Standard Architecture (EISA) bus, etc. The communication bus can be divided into an address bus, a data bus, a control bus, etc.

The electronic apparatus may further include an input apparatus, such as a touch screen, a touchpad, a keyboard, a mouse, a camera, a microphone, an accelerometer, a gyroscope and so on; an output apparatus such as a liquid crystal display, a speaker, a vibrator and so on; a storage apparatus such as a tape , a hard disk (HDD or SDD) and so on; for example, it may also include a communication apparatus such as a LAN card, a network interface card of a modem and so on. The communication apparatus may allow the electronic apparatus perform wireless or wire-linked communications with other equipment to exchange data, performing communication processing through a network such as the Internet. A driver is connected to the I/O interface as needed. Removable storage medias, such as disks, optical disks, magneto-optical disks, semiconductor memories and so on, are installed on the driver as needed, so that computer programs read from disks are installed into the storage apparatus as needed.

For example, the electronic apparatus may further include peripheral interfaces and so on. The peripheral interfaces can be various types of interfaces, such as a USB interface, a lightning interface, etc. The communication apparatus may communicate with the network and other devices by wireless communication; the network is, for example, the Internet, an intranet and / or a wireless network such as a cellular telephone network, a wireless local area network (LAN) and / or a metropolitan area network (MAN). Wireless communication can use any one of a plurality of communication standards, protocols and technologies, including but not limited to, the Global System for Mobile Communications (GSM), Enhanced Data GSM Environment (EDGE), Wideband Code Division Multiple Access (W-CDMA), Code Division Multiple Access (CDMA), Time Division Multiple Access (TDMA), Bluetooth, Wi-Fi (e.g., based on IEEE 802. 11a, IEEE 802. 11b, IEEE 802. 11g and/or IEEE 802. 11n standard), Voice Transport over Internet Protocol (VoIP) and Wi-MAX, the protocols for e-mail, instant messaging, and/or Short Message Service (SMS), or any other suitable communication protocol.

The electronic apparatus may be, for example, a system-on-chip (SOC) or an equipment including the SOC, may be any equipment such as a mobile phone, a tablet computer, a laptop, an e-book, a game console, a television, a digital photo frame, a navigator, a home appliance, a communication base station, an industrial controller, a server and so on, and may be also the combination of any data processing apparatus and a hardware. The embodiments of the present disclosure are not limited to the electronic apparatus.

For the disclosure, the following points need to be explained:

(1) The accompanying drawings of the embodiments of the present disclosure only relate to the structures related to the embodiments of the present disclosure. Other structures can refer to ordinary designs.

(2) Without conflicts, the embodiments of the present disclosure and the characteristics in the embodiments can be combined with each other to obtain new embodiments.

The described above is only the specific embodiments of the present disclosure, but the scope of the disclosure is not limited to the specific embodiments, and the scope of the present disclosure should be determined by the scope of the appended claims.

**Claims**

1.  A tensor calculation unit (200), comprising a first multiply-and-accumulate operator (201) and a second multiply-and-accumulate operator (202) that are cascaded,

    wherein the first multiply-and-accumulate operator (201) comprises a first input port, a second input port, a third input port and a first output port, the first input port, the second input port and the third input port are configured to receive parameters A0, B0 and C, respectively, the first multiply-and-accumulate operator (201) is configured to compute $D0=A0 \times B0+C$, and a calculation result D0 is output at the first output port; and
    the second multiply-and-accumulate operator (202) comprises a fourth input port, a fifth input port, a sixth input port and a second output port, the fourth input port and the fifth input port are configured to receive parameters A1 and B1, respectively, the sixth input port is coupled to the first output port to receive the calculation result D0, the second multiply-and-accumulate operator (202) is configured to compute $D1=A1 \times B1+D0$, and a calculation result D1 is output at the second output port;
    the tensor calculation unit (200) is configured to execute matrix multiplication operation, and the matrix multiplication operation is executed in an interleaved manner;
    a time upon the fourth input port and the fifth input port receive the parameters A1 and B1 and a time upon the first multiply-and-accumulate operator (201) outputting the calculation result D0 to the sixth input port of the second multiply-and-accumulate operator (202) are within a same clock cycle.

2.  A use method of the tensor calculation unit (200) according to claim 1, comprising:

    providing the parameters A0, B0 and C, respectively, to the first input port, the second input port and the third input port of the first multiply-and-accumulate operator (201) at a first time;
    providing the parameters A1 and B1, respectively, to the fourth input port and the fifth input port of the second multiply-and-accumulate operator (202) at a second time; and
    obtaining the calculation result D1 by computing $D1=A1 \times B1+D0$ by the second multiply-and-accumulate operator (202) at a third time after obtaining the calculation result D0 by computing $D0=A0 \times B0+C$ by the first multiply-and-accumulate operator (201) and providing the calculation result D0 to the second multiply-and-accumulate operator (202).

3.  The method according to claim 2, wherein the second time is later than the first time.

4.  A data processing apparatus (300), comprising a plurality of tensor calculation units (301) which are parallel and each of which is according to claim 1.

5.  The data processing apparatus (300) according to claim 4, further comprising a first storage apparatus (302), a second storage apparatus (303) and a third storage apparatus (304),
    wherein the first storage apparatus (302) and the second storage apparatus (303) are configured to respectively store input parameters that are input to the plurality of tensor calculation units (301), and the third storage apparatus (304) is configured to respectively store calculation results that are output by the plurality of tensor calculation units (301).

6.  An operation method of the data processing apparatus (300) according to claim 4 or 5, configured to a multiplication operation of the matrix A $\times$ matrix B, wherein a size of the matrix A is $M \times N$, a size of the matrix B is $N \times M$, M and N are both positive integers, M and N are both less than or equal to a number of the plurality of tensor calculation units (301); the operation method comprises:

    acquiring M first data elements of at least one column from the matrix A and providing the M first data elements of each column of the at least one column to M tensor calculation units;

acquiring at least one second data element of a same column from the matrix B and providing each of the at least one second data element to the M tensor calculation units; and
using the M first data elements of each column of the at least one column and the at least one second data element to execute a multiply-and-accumulate operation by the M tensor calculation units, and outputting M calculation results, wherein M is larger than or equal to 2.

7. The operation method according to claim 6,
wherein the acquiring M first data elements of at least one column from the matrix A, comprises:

acquiring M first data elements $A_i(n)$ and M first data elements $A_i(n+1)$ of each column of two successive columns from the matrix A;
the acquiring at least one second data element of the same column from the matrix B, comprises:

acquiring two successive second data elements, $B(n)_j$ and $B(n+1)_j$, of the same column from the matrix B;
the operation method further comprises acquiring a parameter $C_i$ for accumulation; and
the outputting M calculation results by the M tensor calculation units respectively using M first data elements of each column of at least one column and at least one second data element for multiply-and-accumulate operations calculation, comprises:
outputting the M calculation results by the M tensor calculation units using the M first data elements $A_i(n)$ and the M first data elements $A_i(n+1)$, the second data elements $B(n)_j$ and $B(n+1)_j$ and a parameter $C_i$ to execute a second-order multiply-and-accumulate operation $D_i=A_i(n)\times B(n)_j+A_i(n+1)\times B(n+1)_j+C_i$, wherein $0<=1$, $j<=M-1$, $0<=n<=N-2$ and n is an even number.

8. The operation method according to claim 7, further comprising:
dividing the matrix multiplication operation into a plurality of operation batches, wherein, in at least one operation batch, first data elements of column n and column n+1 acquired from the matrix A are kept, nth and (n+1)th second data elements of successive and different S columns are acquired in sequence from the matrix B, and the second-order multiply-and-accumulate operation are executed S times in sequence, wherein S is a positive integer that is larger than or equal to 2.

9. The operation method according to claim 8, wherein an output matrix that is obtained by a multiplication of the matrix A and the matrix B comprises a plurality of submatrices that are parallel and divided along a row direction, each submatrix comprises M rows, the plurality of submatrices comprises a first submatrix and a second submatrix, and the first submatrix and the second submatrix are adjacent and both comprise S columns; and
the operation method further comprises:
executing matrix multiplication operations for the first submatrix and the second submatrix in an interleaved manner.

10. The operation method according to claim 9, wherein the executing matrix multiplication operations for the first submatrix and the second submatrix in an interleaved manner, comprises:

in a first time period, executing the second-order multiply-and-accumulate operation S times in sequence to obtain a first calculation result, with first data elements of successive column x and column x+1 acquired from the matrix A, and with xth and (x+1)th second data elements of successive and different S columns corresponding to the first submatrix obtained in sequence from the matrix B;
in a second time period, executing the second-order multiply-and-accumulate operation S times in sequence to obtain a second calculation result, with first data elements of successive column x and column x+1 acquired from the matrix A and with xth and (x+1)th second data elements of successive and different S columns corresponding to the second submatrix obtained in sequence from the matrix B;
in a third time period, executing the second-order multiply-and-accumulate operation S times in sequence and accumulate the corresponding first calculation result, with first data elements of successive column x+2 and column x+3 acquired from the matrix A and with (x+2)th and (x+3)th second data elements of successive and different S columns corresponding to the first submatrix obtained in sequence from the matrix B; and
in a fourth time period, executing the second-order multiply-and-accumulate operation S times in sequence and accumulating the corresponding second calculation result, with first data elements of successive column x+2 and column x+3 acquired from the matrix A and with (x+2)th and (x+3)th second data elements of successive and different S columns corresponding to the second submatrix obtained in sequence from the matrix B,
wherein x is a positive integer and $0<=x<=N-4$.

**Patentansprüche**

1. Tensorberechnungseinheit (200), die einen ersten Multiplikations- und Akkumulationsoperator (201) und einen zweiten Multiplikations- und Akkumulationsoperator (202) umfasst, die kaskadiert sind,

   wobei der erste Multiplikations- und Akkumulationsoperator (201) einen ersten Eingangsanschluss, einen zweiten Eingangsanschluss, einen dritten Eingangsanschluss und einen ersten Ausgangsanschluss umfasst, wobei der erste Eingangsanschluss, der zweite Eingangsanschluss und der dritte Eingangsanschluss dazu ausgestaltet sind, die Parameter A0, B0 beziehungsweise C zu empfangen, wobei der erste Multiplikations- und Akkumulationsoperator (201) dazu ausgestaltet ist, $D0=A0\times B0+C$ zu berechnen, und ein Berechnungsergebnis D0 an dem ersten Ausgangsanschluss ausgegeben wird; und
   der zweite Multiplikations- und Akkumulationsoperator (202) einen vierten Eingangsanschluss, einen fünften Eingangsanschluss, einen sechsten Eingangsanschluss und einen zweiten Ausgangsanschluss umfasst, der vierte Eingangsanschluss und der fünfte Eingangsanschluss dazu ausgestaltet sind, die Parameter A1 beziehungsweise B1 zu empfangen, der sechste Eingangsanschluss an den ersten Ausgangsanschluss gekoppelt ist, um das Berechnungsergebnis D0 zu empfangen, der zweite Multiplikations- und Akkumulationsoperator (202) dazu ausgestaltet ist, $D1=A1\times B1+D0$ zu berechnen, und ein Berechnungsergebnis D1 an dem zweiten Ausgangsanschluss ausgegeben wird;
   die Tensorberechnungseinheit (200) dazu ausgestaltet ist, eine Matrixmultiplikationsoperation auszuführen, und die Matrixmultiplikationsoperation auf eine verschachtelte Weise ausgeführt wird;
   ein Zeitpunkt, zu dem der vierte Eingangsanschluss und der fünfte Eingangsanschluss die Parameter A1 und B1 empfangen, und ein Zeitpunkt, zu dem der erste Multiplikations- und Akkumulationsoperator (201) das Berechnungsergebnis D0 an den sechsten Eingangsanschluss des zweiten Multiplikations- und Akkumulationsoperators (202) ausgibt, innerhalb eines selben Taktzyklus liegen.

2. Verfahren zur Verwendung der Tensorberechnungseinheit (200) nach Anspruch 1, umfassend:

   Bereitstellen der Parameter A0, B0 beziehungsweise C für den ersten Eingangsanschluss, den zweiten Eingangsanschluss und den dritten Eingangsanschluss des ersten Multiplikations- und Akkumulationsoperators (201) zu einem ersten Zeitpunkt;
   Bereitstellen der Parameter A1 beziehungsweise B1 für den vierten Eingangsanschluss und den fünften Eingangsanschluss des zweiten Multiplikations- und Akkumulationsoperators (202) zu einem zweiten Zeitpunkt; und
   Erhalten des Berechnungsergebnisses D1 durch Berechnen von $D1=A1\times B1+D0$ durch den zweiten Multiplikations- und Akkumulationsoperator (202) zu einem dritten Zeitpunkt nach dem Erhalten des Berechnungsergebnisses D0 durch Berechnen von $D0=A0\times B0+C$ durch den ersten Multiplikations- und Akkumulationsoperator (201) und Bereitstellen des Berechnungsergebnisses D0 für den zweiten Multiplikations- und Akkumulationsoperator (202).

3. Verfahren nach Anspruch 2, wobei der zweite Zeitpunkt später als der erste Zeitpunkt ist.

4. Datenverarbeitungsvorrichtung (300), die eine Vielzahl von Tensorberechnungseinheiten (301) umfasst, die parallel sind und jeweils nach Anspruch 1 sind.

5. Datenverarbeitungsvorrichtung (300) nach Anspruch 4, ferner umfassend eine erste Speichervorrichtung (302), eine zweite Speichervorrichtung (303) und eine dritte Speichervorrichtung (304), wobei die erste Speichervorrichtung (302) und die zweite Speichervorrichtung (303) dazu ausgestaltet sind, jeweils Eingangsparameter zu speichern, die in die Vielzahl von Tensorberechnungseinheiten (301) eingegeben werden, und die dritte Speichervorrichtung (304) dazu ausgestaltet ist, jeweils Berechnungsergebnisse zu speichern, die von der Vielzahl von Tensorberechnungseinheiten (301) ausgegeben werden.

6. Verfahren für den Betrieb der Datenverarbeitungsvorrichtung (300) nach Anspruch 4 oder 5, das für eine Multiplikationsoperation der Matrix A $\times$ Matrix B ausgestaltet ist, wobei eine Größe der Matrix A $M\times N$ beträgt, eine Größe der Matrix B $N\times M$ beträgt, M und N beide positive ganze Zahlen sind, M und N beide kleiner oder gleich einer Anzahl der Vielzahl von Tensorberechnungseinheiten (301) sind;
   wobei das Betriebsverfahren umfasst:

   Erfassen von M ersten Datenelementen mindestens einer Spalte von der Matrix A und Bereitstellen der M ersten Datenelemente jeder Spalte der mindestens einen Spalte für M Tensorberechnungseinheiten;
Erfassen mindestens eines zweiten Datenelements einer selben Spalte von der Matrix B und Bereitstellen jedes des mindestens einen zweiten Datenelements für die M Tensorberechnungseinheiten; und
Verwenden der M ersten Datenelemente jeder Spalte der mindestens einen Spalte und des mindestens einen zweiten Datenelements zum Ausführen einer Multiplikations- und Akkumulationsoperation durch die M Tensorberechnungseinheiten und Ausgeben von M Berechnungsergebnissen, wobei M größer oder gleich 2 ist.

7. Betriebsverfahren nach Anspruch 6,
wobei das Erfassen von M ersten Datenelementen von mindestens einer Spalte von der Matrix A umfasst:

Erfassen von M ersten Datenelementen Ai(n) und M ersten Datenelementen Ai(n+1) jeder Spalte von zwei aufeinanderfolgenden Spalten von der Matrix A;
wobei das Erfassen mindestens eines zweiten Datenelements derselben Spalte von der Matrix B umfasst:

Erfassen von zwei aufeinanderfolgenden zweiten Datenelementen B(n)j und B(n+1)j derselben Spalte von der Matrix B;
wobei das Betriebsverfahren ferner das Erfassen eines Parameters Ci zur Akkumulation umfasst; und
das Ausgeben von M Berechnungsergebnissen durch die M Tensorberechnungseinheiten unter Verwendung von jeweils M ersten Datenelementen jeder Spalte von mindestens einer Spalte und mindestens einem zweiten Datenelement zur Multiplikations- und Akkumulationsoperationsberechnung umfasst:
Ausgeben der M Berechnungsergebnisse durch die M Tensorberechnungseinheiten unter Verwendung der M ersten Datenelemente Ai(n) und der M ersten Datenelemente Ai(n+1), der zweiten Datenelemente B(n)j und B(n+1)j und eines Parameters Ci zum Ausführen einer Multiplikations- und Akkumulationsoperation zweiter Ordnung $Di=Ai(n) \times B(n)j+Ai(n+1) \times B(n+1)j+Ci$, wobei $0<=i$, $j<=M-1$, $0<=n<=N-2$ und n eine gerade Zahl ist.

8. Betriebsverfahren nach Anspruch 7, ferner umfassend:
Unterteilen der Matrixmultiplikationsoperation in eine Vielzahl von Operationsblöcken, wobei in mindestens einem Operationsblock erste Datenelemente der Spalte n und der Spalte n+1, die von der Matrix A erfasst werden, behalten werden, nte und (n+1)te zweite Datenelemente von folgenden und unterschiedlichen S Spalten in Folge von der Matrix B erfasst werden und die Multiplikations- und Akkumulationsoperationen zweiter Ordnung S Mal in Folge ausgeführt werden, wobei S eine positive ganze Zahl ist, die größer oder gleich 2 ist.

9. Betriebsverfahren nach Anspruch 8, wobei eine Ausgangsmatrix, die durch eine Multiplikation der Matrix A und der Matrix B erhalten wird, eine Vielzahl von Untermatrizes umfasst, die parallel und entlang einer Zeilenrichtung unterteilt sind, wobei jede Untermatrix M Zeilen umfasst, die Vielzahl von Untermatrizes eine erste Untermatrix und eine zweite Untermatrix umfassen und die erste Untermatrix und die zweite Untermatrix benachbart sind und beide S Spalten umfassen; und
das Betriebsverfahren ferner umfasst:
Ausführen von Matrixmultiplikationsoperationen für die erste Untermatrix und die zweite Untermatrix auf eine verschachtelte Weise.

10. Betriebsverfahren nach Anspruch 9, wobei das Ausführen von Matrixmultiplikationsoperationen für die erste Untermatrix und die zweite Untermatrix auf eine verschachtelte Weise umfasst:

in einem ersten Zeitraum, Ausführen der Multiplikations- und Akkumulationsoperation zweiter Ordnung S Mal in Folge, um ein erstes Berechnungsergebnis zu erhalten, mit ersten Datenelementen der aufeinanderfolgenden Spalte x und Spalte x+1, die von der Matrix A erfasst werden, und mit xten und (x+1)ten zweiten Datenelementen von aufeinanderfolgenden und unterschiedlichen S Spalten, die der ersten Untermatrix entsprechen, die in Folge von der Matrix B erhalten wird;
in einem zweiten Zeitraum, Ausführen der Multiplikations- und Akkumulationsoperation zweiter Ordnung S Mal in Folge, um ein zweites Berechnungsergebnis zu erhalten, mit ersten Datenelementen der aufeinanderfolgenden Spalte x und Spalte x+1, die von der Matrix A erfasst werden, und mit xten und (x+1)ten zweiten Datenelementen von aufeinanderfolgenden und unterschiedlichen S Spalten, die der zweiten Untermatrix entsprechen, die in Folge von der Matrix B erhalten wird;
in einem dritten Zeitraum, Ausführen der Multiplikations- und Akkumulationsoperation zweiter Ordnung S Mal in Folge und Akkumulieren des entsprechenden ersten Berechnungsergebnisses mit ersten Datenelementen der aufeinanderfolgenden Spalte x+2 und Spalte x+3, die von der Matrix A erfasst werden, und mit (x+2)ten und (x+3)ten zweiten Datenelementen von aufeinanderfolgenden und unterschiedlichen S Spalten, die der ersten Untermatrix entsprechen, die in Folge von der Matrix B erhalten wird; und

in einem vierten Zeitraum, Ausführen der Multiplikations- und Akkumulationsoperation zweiter Ordnung S Mal in Folge und Akkumulieren des entsprechenden zweiten Berechnungsergebnisses mit ersten Datenelementen der aufeinanderfolgenden Spalte x+2 und Spalte x+3, die von der Matrix A erfasst werden, und mit (x+2)ten und (x+3) ten zweiten Datenelementen von aufeinanderfolgenden und unterschiedlichen S Spalten, die der zweiten Untermatrix entsprechen, die in Folge von der Matrix B erhalten wird;

wobei x eine positive ganze Zahl ist und 0<=x<=N-4.

## Revendications

1. Unité de calcul tensoriel (200), comprenant un premier opérateur de multiplication et d'accumulation (201) et un deuxième opérateur de multiplication et d'accumulation (202) qui sont montés en cascade,

dans laquelle le premier opérateur de multiplication et d'accumulation (201) comprend un premier port d'entrée, un deuxième port d'entrée, un troisième port d'entrée et un premier port de sortie, le premier port d'entrée, le deuxième port d'entrée et le troisième port d'entrée étant configurés pour recevoir les paramètres A0, B0 et C, respectivement, le premier opérateur de multiplication et d'accumulation (201) est configuré pour calculer $D0=A0 \times B0+C$, et un résultat de calcul D0 est émis au niveau du premier port de sortie ; et

le deuxième opérateur de multiplication et d'accumulation (202) comprend un quatrième port d'entrée, un cinquième port d'entrée, un sixième port d'entrée et un deuxième port de sortie, le quatrième port d'entrée et le cinquième port d'entrée sont configurés pour recevoir respectivement les paramètres A1 et B1, le sixième port d'entrée est couplé au premier port de sortie pour recevoir le résultat du calcul D0, le deuxième opérateur de multiplication et d'accumulation (202) est configuré pour calculer $D1=A1 \times B1+D0$, et un résultat de calcul D1 est émis au niveau du deuxième port de sortie ;

l'unité de calcul tensoriel (200) est configurée pour exécuter une opération de multiplication matricielle, et l'opération de multiplication matricielle est exécutée de manière entrelacée ;

un moment où le quatrième port d'entrée et le cinquième port d'entrée reçoivent les paramètres A1 et B1 et un moment où le premier opérateur de multiplication et d'accumulation (201) délivre le résultat du calcul D0 au sixième port d'entrée du deuxième opérateur de multiplication et d'accumulation (202) se situent dans un même cycle d'horloge.

2. Procédé d'utilisation de l'unité de calcul tensoriel (200) selon la revendication 1, comprenant :

fournir les paramètres A0, B0 et C, respectivement, au premier port d'entrée, au deuxième port d'entrée et au troisième port d'entrée du premier opérateur de multiplication et d'accumulation (201) à un premier moment ;

fournir les paramètres A1 et B1, respectivement, au quatrième port d'entrée et au cinquième port d'entrée du deuxième opérateur de multiplication et d'accumulation (202) à un deuxième moment ; et

obtenir le résultat de calcul D1 en calculant $D1=A1 \times B1+D0$ par le deuxième opérateur de multiplication et d'accumulation (202) à un troisième moment après avoir obtenu le résultat de calcul D0 en calculant $D0=A0 \times B0+C$ par le premier opérateur de multiplication et d'accumulation (201) et fourni le résultat de calcul D0 au deuxième opérateur de multiplication et d'accumulation (202).

3. Procédé selon la revendication 2, dans lequel le deuxième moment est postérieur au premier moment.

4. Appareil de traitement de données (300), comprenant une pluralité d'unités de calcul tensoriel (301) qui sont parallèles et dont chacune est conforme à la revendication 1.

5. Appareil de traitement de données (300) selon la revendication 4, comprenant en outre un premier appareil de stockage (302), un deuxième appareil de stockage (303) et un troisième appareil de stockage (304),

dans lequel le premier dispositif de stockage (302) et le deuxième dispositif de stockage (303) sont configurés pour stocker respectivement des paramètres d'entrée qui sont entrés dans la pluralité d'unités de calcul tensoriel (301), et le troisième dispositif de stockage (304) est configuré pour stocker respectivement des résultats de calcul qui sont sortis par la pluralité d'unités de calcul tensoriel (301).

6. Procédé de fonctionnement de l'appareil de traitement de données (300) selon la revendication 4 ou 5, configuré pour une opération de multiplication de la matrice A $\times$ matrice B, dans lequel une taille de la matrice A est $M \times N$, une taille

de la matrice B est N×M, M et N sont tous deux des entiers positifs, M et N sont tous deux inférieurs ou égaux à un nombre de la pluralité d'unités de calcul tensoriel (301) ;
le procédé de fonctionnement comprenant :

l'acquisition de M premiers éléments de données d'au moins une colonne de la matrice A et la fourniture des M premiers éléments de données de chaque colonne de la au moins une colonne à M unités de calcul tensoriel ;
acquérir au moins un deuxième élément de données d'une même colonne à partir de la matrice B et fournir chacun des au moins un deuxième élément de données aux M unités de calcul tensoriel ; et
utiliser les M premiers éléments de données de chaque colonne de la au moins une colonne et le au moins un deuxième élément de données pour exécuter une opération de multiplication et d'accumulation par les M unités de calcul tensoriel, et fournir en sortie M résultats de calcul, où M est supérieur ou égal à 2.

7. Procédé d'opération selon la revendication 6,
dans lequel l'acquisition des M premiers éléments de données d'au moins une colonne de la matrice A comprend :

l'acquisition des M premiers éléments de données $A_i(n)$ et des M premiers éléments de données $A_i(n+1)$ de chaque colonne de deux colonnes successives de la matrice A ;
l'acquisition d'au moins un deuxième élément de données de la même colonne à partir de la matrice B comprend :

l'acquisition de deux deuxièmes éléments de données successifs, $B(n)j$ et $B(n+1)j$, de la même colonne à partir de la matrice B ;
le procédé d'opération comprend en outre l'acquisition d'un paramètre $C_i$ pour l'accumulation ; et
la sortie de M résultats de calcul par les M unités de calcul tensoriel utilisant respectivement M premiers éléments de données de chaque colonne d'au moins une colonne et au moins un deuxième élément de données pour le calcul d'opérations de multiplication et d'accumulation, comprend :
la sortie des M résultats de calcul par les M unités de calcul tensoriel en utilisant les M premiers éléments de données $A_i(n)$ et les M premiers éléments de données $A_i(n+1)$, les seconds éléments de données $B(n)j$ et $B(n+1)j$ et un paramètre $C_i$ pour exécuter une opération de multiplication et d'accumulation du second ordre $D_i=A_i(n)×B(n)j+A_i(n+1)×B(n+1)j+C_i$, où $0<=i, j<=M-1, 0<=n<=N-2$ et n est un nombre pair.

8. Procédé d'opération selon la revendication 7, comprenant en outre :
la division de l'opération de multiplication matricielle en une pluralité de lots d'opérations, dans laquelle, dans au moins un lot d'opérations, les premiers éléments de données de la colonne n et de la colonne n+1 acquis à partir de la matrice A sont conservés, les n-ième et (n+1)-ième seconds éléments de données de S colonnes successives et différentes sont acquis séquentiellement à partir de la matrice B, et l'opération de multiplication et d'accumulation du second ordre est exécutée S fois de manière séquentielle, où S est un entier positif supérieur ou égal à 2.

9. Procédé d'opération selon la revendication 8, dans lequel une matrice de sortie obtenue par multiplication de la matrice A et de la matrice B comprend une pluralité de sous-matrices parallèles et divisées dans le sens des lignes, chaque sous-matrice comprend M lignes, la pluralité de sous-matrices comprend une première sous-matrice et une deuxième sous-matrice, et la première sous-matrice et la deuxième sous-matrice sont adjacentes et comprennent toutes deux S colonnes ; et
le procédé d'opération comprend en outre :
l'exécution d'opérations de multiplication matricielle pour la première sous-matrice et la deuxième sous-matrice d'une manière entrelacée .

10. Procédé d'opération selon la revendication 9, dans lequel l'exécution d'opérations de multiplication matricielle pour la première sous-matrice et la deuxième sous-matrice de manière entrelacée comprend :

dans une première période de temps, l'exécution de l'opération de multiplication et d'accumulation du second ordre S fois de suite pour obtenir un premier résultat de calcul, avec les premiers éléments de données des colonnes successives x et x+1 acquis à partir de la matrice A, et avec les xème et (x+1)ème seconds éléments de données de S colonnes successives et différentes correspondant à la première sous-matrice obtenue de manière séquentielle à partir de la matrice B ;
dans une deuxième période de temps, exécuter l'opération de multiplication et d'accumulation du deuxième ordre S fois de suite pour obtenir un deuxième résultat de calcul, avec les premiers éléments de données des colonnes x et x+1 successives acquises à partir de la matrice A et avec les x-ième et (x+1)-ième seconds éléments de données des S colonnes successives et différentes correspondant à la deuxième sous-matrice obtenue de manière séquentielle à partir de la matrice B ;

dans un troisième intervalle de temps, exécuter S fois de suite l'opération de multiplication et d'accumulation du second ordre et accumuler le premier résultat de calcul correspondant, avec les premiers éléments de données des colonnes x+2 et x+3 successives acquises à partir de la matrice A et avec les (x+2)ème et (x+3)ème seconds éléments de données de S colonnes successives et différentes correspondant à la première sous-matrice obtenue de manière séquentielle à partir de la matrice B ; et

dans une quatrième période, exécuter S fois de suite l'opération de multiplication et d'accumulation du second ordre et accumuler le second résultat de calcul correspondant, avec les premiers éléments de données des colonnes successives x+2 et x+3 obtenus à partir de la matrice A et avec les (x+2)ème et (x+3)ème seconds éléments de données de S colonnes successives et différentes correspondant à la seconde sous-matrice obtenue de manière séquentielle à partir de la matrice B,

où x est un entier positif et 0<=x<=N-4.

Fig. 1

A0     B0     C     A1 B1

200

×

+

201

×

+

202

Fig. 2

300

First storage appratus
302

Second storage apparatus
303

Third storage apparatus
304

| Tensor calculation unit 301 | Tensor calculation unit 301 | ℮ ℮ | Tensor calculation unit 301 |

Fig. 3

M first data elements of at least one column are acquired from the matrix A, and the M first data elements of each column of the at least one column are respectively provided to M tensor calculation units

S401

At least one second data element of the same column is acquired from the matrix B, and each of the at least one second data element is provided to the M tensor calculation units

S402

the M tensor calculation units respectively use the M first data elements of each column of at least one column and the at least one second data element of each column for multiply-and-accumulate operations, and output M calculation results, wherein M is larger than or equal to 2

S403

Fig. 4

Fig. 5

**REFERENCES CITED IN THE DESCRIPTION**

**Patent documents cited in the description**

- US 2021157548 A1

- US 10521194 B2